# EUROPEAN PATENT APPLICATION

(11) **EP 4 488 619 A1**
(43) Date of publication of application: **08.01.2025**
(21) Application number: 23763420.9
(22) Date of filing: 28.02.2023
(51) Int. Cl.: G01B 11/245, G01B 11/25

(54) **DOT PATTERN GENERATION METHOD AND THREE-DIMENSIONAL MEASUREMENT DEVICE**

(30) Priority: 01.03.2022 JP 2022031209
(71) Applicant: KOWA COMPANY, LTD., Naka-ku Nagoya-shi Aichi 460-8625 (JP)
(72) Inventor: TAKEDA Jun, Nagoya-shi Aichi 460-0003 (JP)
(74) Representative: Mathys & Squire
(86) International application number: PCT/JP2023/007197
(87) International publication number: WO 2023/167162

(57) **Abstract**

A dot pattern generating method for generating a dot pattern to be projected onto a target object with projection light in order to calculate parallax information and perform three-dimensional measurement by stereo matching so as to allow irradiation of a projection region with a uniform amount of light includes: a region dividing step of dividing a region in a range where the dot pattern is generated into at least two or more regions in accordance with a distance from an irradiation center of the projection light; a density determining step of determining density information on dots to be set for each of the plurality of regions, such that a density of the dots arranged in one of the plurality of regions farther from the irradiation center of the projection light is lower than a density of the dots arranged in another one of the plurality of regions closer to the irradiation center of the projection light; and a dot pattern generating step of generating the dot pattern by arranging the dots in each of the plurality of regions, based on a rule defined by an algorithm of poisson disk sampling and the determined density information.

## Description

### Technical Field

The present invention relates to a dot pattern generating method and a three-dimensional measuring apparatus for three-dimensional measurement of a target object.

### Background Art

An apparatus has conventionally been used, which measures a three-dimensional shape of a target object, based on two captured images of the target object captured from two directions, using the principle of triangulation. Here, in the case of using the principle of triangulation, it is necessary to localize corresponding locations that correspond to each other between the two captured images. An example of a method for localizing the corresponding locations is a method of comparing luminance information on a small region in one of the two captured images with luminance information on a small region in the other image. However, for example, a situation that makes it difficult to localize the corresponding locations with high accuracy may occur when the target object has a flat portion, a portion where a color is less likely to change, or the like.

As a measure against this situation, there is a method of projecting projection light having a predetermined pattern onto the target object and utilizing the projection light for localizing the corresponding locations. For example, Patent Literature 1 discloses a technique that involves, in a case where it is determined that corresponding locations between two captured images cannot be localized accurately, projecting light having a specific pattern shape from a pattern projector, localizing the corresponding locations, based on the brightness of the specific pattern shape, and calculating parallax information.

### Citation List

### Patent Literature

Patent Literature 1: JP H4-25758 B

### Summary of Invention

### Technical Problem

Meanwhile, a random dot pattern has typically been used as a brightness pattern of projection light to be projected onto a target object for the purpose of localizing corresponding locations in stereo matching. A light source is used for projecting a dot pattern onto a target object. In a case where the light source is a point source such as an LED, the amount of light is large at the center of an irradiation range with the projection light, and the amount of light gradually decreases in the direction away from the center. Saturation is caused if an image is captured in the state in which there is a difference in amount of light, using a camera having a narrow dynamic range, which may result in blooming or black crushing. In the related art, there is a problem that a captured image undergoing blooming or black crushing decreases the accuracy of localizing corresponding locations in stereo matching.

The present invention has been made in view of the foregoing problem, and an object of the present invention is to provide a dot pattern generating method and a three-dimensional measuring apparatus that enable irradiation of a projection region with a uniform amount of light even when a light source for emitting a dot pattern is a point source such as an LED.

### Solution to Problem

A dot pattern generating method according to the present invention is a dot pattern generating method for generating a dot pattern to be projected onto the target object with projection light in order to calculate parallax information and perform three-dimensional measurement by stereo matching, the dot pattern generating method including: a region dividing step of dividing a region in a range where the dot pattern is generated into at least two or more regions in accordance with a distance from an irradiation center of the projection light; a density determining step of determining density information on dots to be set for each of the plurality of regions, such that a density of the dots arranged in one of the plurality of regions farther from the irradiation center of the projection light is lower than a density of the dots arranged in another one of the plurality of regions closer to the irradiation center of the projection light; and a dot pattern generating step of generating the dot pattern by arranging the dots in each of the plurality of regions, based on a rule defined by an algorithm of poisson disk sampling and the determined density information.

Also in the dot pattern generating method according to the present invention, furthermore, in the dot pattern generating step, the dot pattern may be generated by: determination processing of determining a plurality of reference positions in accordance with the rule defined by the algorithm of poisson disk sampling; selection processing of selecting one of a plurality of arrangement patterns each indicating an arrangement of at least one or more dots, in order to arrange the dots at the respective reference positions; and arrangement processing of arranging the dots at the respective reference positions, based on the selected arrangement pattern, in the dot pattern generating step, at least two or more groups may be previously set, in which the arrangement patterns are classified in accordance with an arrangement density of the dots, and in the selection processing, the arrangement patterns for arranging the dots at the respective reference positions may be selected based on a predetermined selection rule that determines, for each region, from which group to select the arrangement patterns to be arranged in the region.

Also in the dot pattern generating method according to the present invention, furthermore, the selection rule may determine a ratio of selecting the arrangement patterns to be arranged in each region, from the plurality of groups, to reflect the density information set for the region.

Also in the dot pattern generating method according to the present invention, furthermore, in the dot pattern generating step, the dot pattern may be generated by: determination processing of determining a plurality of reference positions in accordance with the rule defined by the algorithm of poisson disk sampling; selection processing of selecting one of a plurality of arrangement patterns each indicating an arrangement of at least one or more dots, in order to arrange the dots at the respective reference positions; and arrangement processing of arranging the dots at the respective reference positions, based on the selected arrangement pattern, and in the determination processing, an arrangement density of the dots arranged at the reference positions in each region may be determined based on the density information set for the region.

Also in the dot pattern generating method according to the present invention, furthermore, the plurality of arrangement patterns may be a combination of patterns that, with regard to which locations in a preset dot arrangement region to arrange the dots, do not overlap each other when being subjected to translation in the dot arrangement region.

A three-dimensional measuring apparatus according to the present invention is a three-dimensional measuring apparatus for performing three-dimensional measurement on a target object, the three-dimensional measuring apparatus including: a dot pattern generating unit that generates a dot pattern, based on the dot pattern generating method having any one of the foregoing features; a dot pattern projection control unit that controls a projecting device such that the projecting device projects projection light having the dot pattern onto the target object; a captured image acquiring unit that acquires two captured images by controlling an image capturing device such that the image capturing device captures images of the target object, to which the projection light has been projected, from two directions; a parallax information calculating unit that calculates parallax information on the acquired two captured images; and a three-dimensional shape identifying unit that identifies a three-dimensional shape of the target object, based on the calculated parallax information.

A three-dimensional measuring apparatus according to the present invention is a three-dimensional measuring apparatus for performing three-dimensional measurement on a target object, the three-dimensional measuring apparatus including: a dot pattern generation processing unit that previously generates a dot pattern, based on the dot pattern generating method having any one of the foregoing features, and stores the dot pattern in a predetermined storage unit; a dot pattern projection control unit that reads the dot pattern from the storage unit and controls a projecting device such that the projecting device projects projection light having the dot pattern onto the target object; a captured image acquiring unit that acquires two captured images by controlling an image capturing device such that the image capturing device captures images of the target object, to which the projection light has been projected, from two directions; a parallax information calculating unit that calculates parallax information on the acquired two captured images; and a three-dimensional shape identifying unit that identifies a three-dimensional shape of the target object, based on the calculated parallax information.

### Advantageous Effects of Invention

According to the present invention, it is possible to generate a dot pattern so that a density of dots at a center portion is high and gradually decreases in the direction away from the center. Using this dot pattern, therefore, even a point source such as an LED projects projection light to irradiate a projection region with the uniform amount of light. It is thus possible to stably perform stereo matching without saturation even when a dynamic range of a camera is narrow.

### Brief Description of Drawings

Fig. 1 is a block diagram illustrating an example of a configuration of a three-dimensional measuring apparatus corresponding to at least one of embodiments of the present invention.
Fig. 2 is a flowchart illustrating an example of a flow of three-dimensional measurement processing corresponding to at least one of embodiments of the present invention.
Fig. 3 is a flowchart illustrating an example of a general flow of dot pattern generation according to the present example corresponding to at least one of embodiments of the present invention.
Fig. 4 is a flowchart illustrating an example of a flow of a dot pattern generating step according to the present example corresponding to at least one of embodiments of the present invention.
Fig. 5 is an explanatory diagram explaining an example of an arrangement pattern belonging to a first group corresponding to at least one of embodiments of the present invention.
Fig. 6 is an explanatory diagram explaining an example of an arrangement pattern belonging to a second group corresponding to at least one of embodiments of the present invention.
Fig. 7 is an explanatory diagram explaining an example of a way to set density information and arrange dots for each region corresponding to at least one of embodiments of the present invention.
Fig. 8 is an image diagram illustrating an example of a dot pattern generated based on the way to set the density information and arrange the dots for each region corresponding to at least one of embodiments of the present invention.

### Description of Embodiments

### First Embodiment

An example of a three-dimensional measuring apparatus according to a first embodiment of the present invention will be described below with reference to the drawings.

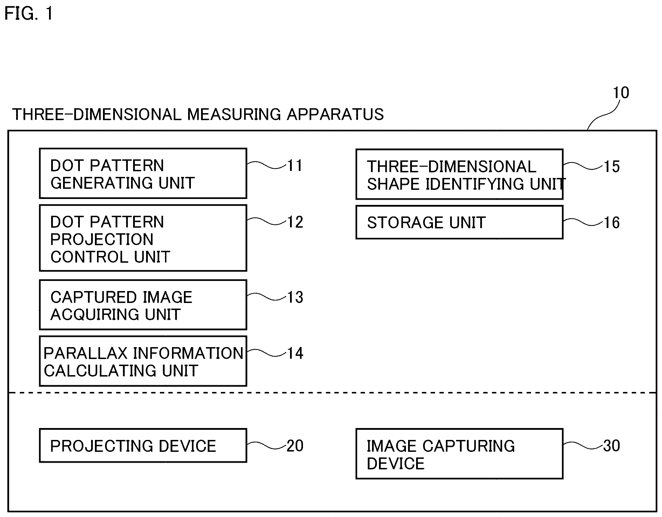

Fig. 1 is a block diagram illustrating an example of a configuration of a three-dimensional measuring apparatus corresponding to at least one of embodiments of the present invention. As illustrated in Fig. 1, a three-dimensional measuring apparatus 10 includes a dot pattern generating unit 11, a dot pattern projection control unit 12, a captured image acquiring unit 13, a parallax information calculating unit 14, a three-dimensional shape identifying unit 15, and a storage unit 16.

The three-dimensional measuring apparatus 10 is an apparatus for performing three-dimensional measurement on a target object. Specifically, the three-dimensional measuring apparatus 10 is an apparatus that projects projection light onto a target object to capture an image of the target object, and identifies a three-dimensional shape of the target object, based on the captured image of the target object to which the projection light has been projected. The three-dimensional measuring apparatus 10 may include a central processing unit (CPU), a memory, and a storage such as a hard disk drive or an SSD, which a typical computer will generally include. The three-dimensional measuring apparatus 10 may also include input devices such as a mouse and a keyboard, output devices such as a display and a printer, and a communication device for establishing a connection to a communication network. The three-dimensional measuring apparatus 10 may have a configuration in which these devices are connected to each other via a bus. Processing in each unit of the three-dimensional measuring apparatus 10 is realized in such a manner that a program for executing the processing in each unit is read from a memory and executed by a CPU, a GPU, or an FPGA functioning as a control circuit (processing circuit, processing circuitry). In other words, a processor (processing circuit) is configured to execute this program, thereby performing each processing of each device.

The three-dimensional measuring apparatus 10 utilizes a projecting device 20 and an image capturing device 30 for three-dimensional measurement. The present example is described on the assumption that the three-dimensional measuring apparatus 10 is realized as a special-purpose machine and the projecting device 20 and the image capturing device 30 are integrally incorporated in the three-dimensional measuring apparatus 10. As a matter of course, the projecting device 20 and the image capturing device 30 are not necessarily incorporated in the three-dimensional measuring apparatus 10. The three-dimensional measuring apparatus 10 may utilize an external projecting device 20 and/or an external image capturing device 30.

The projecting device 20 is a device for projecting projection light onto a target object. Examples of the projecting device 20 include a projector and a display. The image capturing device 30 is a device for capturing images of a target object from two directions. For example, the three-dimensional measuring apparatus 10 includes two image capturing devices 30 at locations where the two image capturing devices 30 can capture images of a target object from two directions. In addition, in a case where the image capturing device 30 is, for example, an external device provided independently of the three-dimensional measuring apparatus 10, two devices that are independently of each other or one device including two image capturing optical systems are or is used as the image capturing device 30. An example of the image capturing device 30 is a stereo camera.

The dot pattern generating unit 11 has a function of generating a dot pattern, based on a predetermined generation scheme. A dot pattern to be generated by the dot pattern generating unit 11 is a pattern indicating a change in brightness of projection light projected by the projecting device 20, and is also a two-dimensional pattern indicated by an arrangement of dots. It should be noted that the shape of each dot is not particularly limited, and each dot may have a round shape or a quadrilateral shape. A specific dot pattern generating method will be described later. In the following description, a dot pattern that is generated by the dot pattern generating unit 11 and is unique to the present example is referred to as "the present example dot pattern".

The dot pattern projection control unit 12 has a function of controlling the projecting device 20 such that the projecting device 20 projects the projection light having the present example dot pattern onto the target object. Here, a portion corresponding to a certain dot in the present example dot pattern in the case where the projection light is projected onto the target object may be a portion higher in luminance than a portion corresponding to a dot except the relevant dot (i.e., a bright portion) or may be a portion lower in luminance than the portion corresponding to the dot except the relevant dot (i.e., a dark portion). In the present example, the projection processing by the dot pattern projection control unit 12 is performed by controlling the projecting device 20.

The captured image acquiring unit 13 has a function of acquiring two captured images by controlling the image capturing device 30 such that the image capturing device 30 captures images of the target object, to which the projection light has been projected, from two directions. In the present example, the image capture processing by the captured image acquiring unit 13 from two directions is performed by controlling the image capturing device 30 incorporated in the three-dimensional measuring apparatus 10. It should be noted that the image capturing device 30 captures images from two directions in a state in which a portion of the target object to which the projection light has been projected falls within the respective angles of view.

The parallax information calculating unit 14 has a function of calculating parallax information on the acquired two captured images. Specifically, the parallax information calculating unit 14 performs, on the two captured images (the first captured image and the second captured image) acquired by the captured image acquiring unit 13, processing of localizing a location in the second captured image corresponding to a predetermined location of the first captured image, and calculating, as parallax information, distance information between pixel positions at the respective locations. For example, the predetermined location is one pixel at a predetermined position in the captured image. For example, when the parallax information calculating unit 14 identifies one pixel in the second captured image corresponding to the one pixel at the predetermined position of the captured image, then, the parallax information calculating unit 14 calculates, as parallax information, information indicating a distance between pixel positions as to the two pixels the correspondence of which has been identified. As used herein, a pixel position refers to a position corresponding to each pixel in a captured image including a plurality of pixels.

When localizing the location in the second captured image corresponding to the predetermined location of the first captured image, the parallax information calculating unit 14 may utilize luminance information on each captured image. The luminance information on each captured image is present for each pixel, for example. Here, luminance information on a pixel in a predetermined range with respect to a predetermined location of each captured image may be utilized. For example, the parallax information calculating unit 14 utilizes luminance information on a predetermined number of pixels in a predetermined range with one pixel at a predetermined position in each captured image as a center (e.g., nine pixels (three vertical pixels by three horizontal pixels) in total with the pixel at the predetermined position as a center).

An example of a method of utilizing the luminance information in localizing the location in the second captured image corresponding to the predetermined location of the first captured image is described here. First, binary vector data is generated by binarizing a result of comparison in value between the luminance of one pixel at a predetermined position and the luminance of a plurality of pixels in a predetermined range with the one pixel as a center. The location of the second captured image corresponding to the predetermined location of the first captured image is then localized based on a hamming distance between the captured images with regard to the data. The above describes an example of the method of utilizing the luminance information.

The three-dimensional shape identifying unit 15 has a function of identifying a three-dimensional shape of the target object, based on the calculated parallax information. Here, the three-dimensional shape identifying unit 15 utilizes the principle of triangulation for identifying the three-dimensional shape of the target object. The three-dimensional shape identifying unit 15 calculates information on a distance from the image capturing device 30 to each location in the target object, based on, for example, information indicating a distance between the pixel positions calculated by the parallax information calculating unit 14, using the principle of triangulation, and identifies the three-dimensional shape of the target object, based on the calculated distance information.

The storage unit 16 has a function of storing information required for the processing in each unit of the three-dimensional measuring apparatus 10 and also storing various kinds of information generated through the processing in each unit.

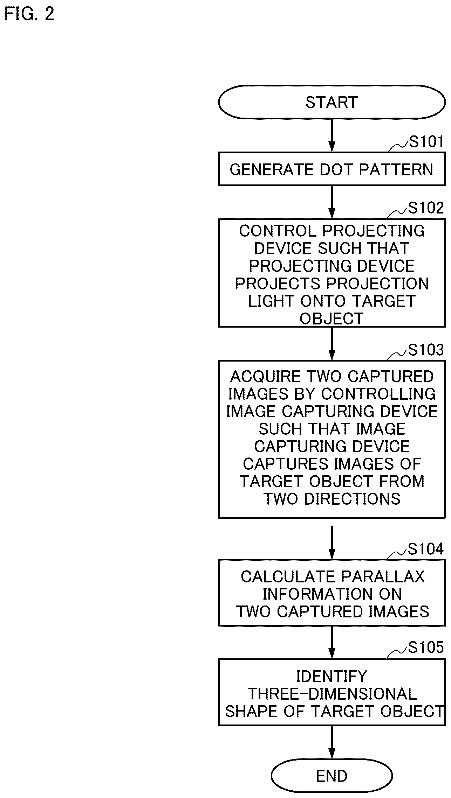

Fig. 2 is a flowchart illustrating an example of a flow of three-dimensional measurement processing corresponding to at least one of embodiments of the present invention. The flow of the three-dimensional measurement processing in the three-dimensional measuring apparatus 10 corresponding to at least one of embodiments of the present invention is described with reference to Fig. 2.

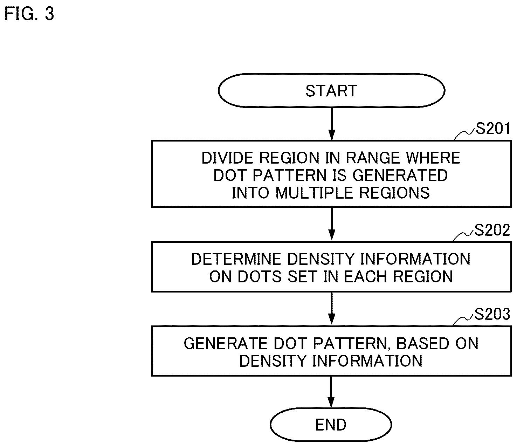

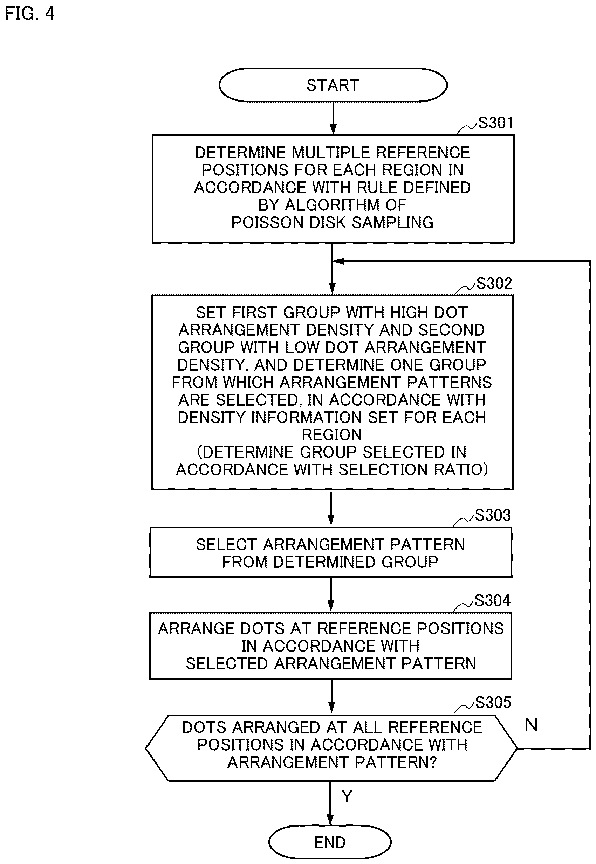

In Fig. 2, the three-dimensional measurement processing starts when the three-dimensional measuring apparatus 10 generates the present example dot pattern (step S101). A specific flow of the present example dot pattern generating method is described with reference to Figs. 3 and 4. Next, the three-dimensional measuring apparatus 10 controls the projecting device 20 such that the projecting device 20 projects projection light having the present example dot pattern onto a target object (step S102). Next, the three-dimensional measuring apparatus 10 acquires two captured images by controlling the image capturing device 30 such that the image capturing device 30 captures images of the target object from two directions (step S103). Next, the three-dimensional measuring apparatus 10 calculates parallax information on the two captured images (step S104). Finally, the three-dimensional measuring apparatus 10 identifies a three-dimensional shape of the target object, based on the parallax information (step S105). The processing thus ends.

### Dot Pattern Generating Method

Next, the present example dot pattern generating method is described in detail.

Fig. 3 is a flowchart illustrating an example of a general flow of generation of the present example dot pattern corresponding to at least one of embodiments of the present invention. As illustrated in Fig. 3, generation of the present example dot pattern starts when the three-dimensional measuring apparatus 10 divides a region in a range where a dot pattern is generated into at least two or more regions in accordance with a distance from an irradiation center of projection light (region dividing step) (step S201). Any dividing method is usable as long as a region can be divided in accordance with a distance from an irradiation center. For example, it is considered to divide a region into a plurality of regions, using a plurality of concentric circles that are different in radius of gyration from each other. Next, the three-dimensional measuring apparatus 10 determines density information on dots to be set for each of the plurality of regions, such that a density of the dots arranged in one of the plurality of regions farther from the irradiation center of the projection light is lower than a density of the dots arranged in another one of the plurality of regions closer to the irradiation center of the projection light (density determining step) (step S202). Any density information designating method is usable. For example, a specific dot density may be designated as a numeric value. Alternatively, a relative density relationship between regions may be designated as, for example, "high density", "middle density", or "low density". Next, the three-dimensional measuring apparatus 10 generates the present example dot pattern by arranging the dots in each of the plurality of regions, based on a rule defined by an algorithm of poisson disk sampling and the determined density information (dot pattern generating step) (step S203), and ends this generation processing.

Fig. 4 is a flowchart illustrating an example of a flow of the dot pattern generating step according to the present example corresponding to at least one of embodiments of the present invention. The flow described with reference to Fig. 4 is an example of a more specific flow of the dot pattern generating step in step S203 illustrated in Fig. 3. As illustrated in Fig. 4, the dot pattern generating step starts when the three-dimensional measuring apparatus 10 determines a plurality of reference positions in each of the plurality of regions in accordance with the rule defined by the algorithm of poisson disk sampling (step S301). Next, in order to arrange the dots at the respective reference positions, based on an arrangement pattern, the three-dimensional measuring apparatus 10 sets a first group to which a plurality of arrangement patterns with high dot arrangement densities belong and a second group to which a plurality of arrangement patterns with low dot arrangement densities belong, and determines one of the groups from which the arrangement patterns are selected, in accordance with the density information set for each of the plurality of regions (step S302). At this time, a selection ratio between the first group and the second group is previously defined for each region. Next, the three-dimensional measuring apparatus 10 selects one of the arrangement patterns from the determined group (step S303).
Preferably, the arrangement pattern selected at this time is determined at random. Next, the three-dimensional measuring apparatus 10 arranges the dots at the respective reference positions in accordance with the selected arrangement pattern (step S304). As such, the three-dimensional measuring apparatus 10 repeatedly performs the processing of arranging a dot by carrying out steps S302 to S304 for one reference position until the dots are arranged at all the reference positions (step S305). Next, the three-dimensional measuring apparatus 10 ends the dot pattern generating step after the dots are arranged at all the reference positions (S305-Y).

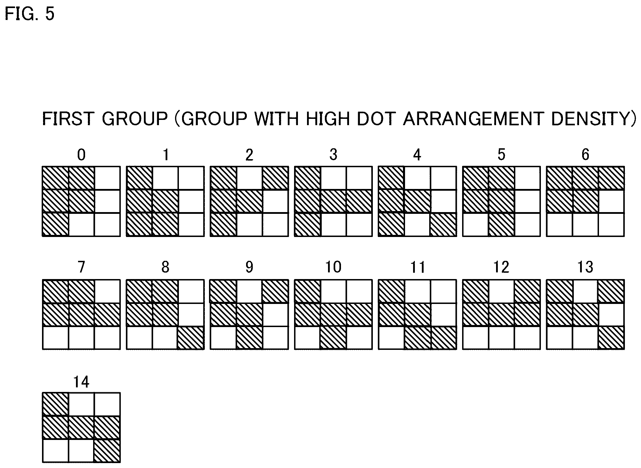

Fig. 5 is an explanatory diagram explaining an example of an arrangement pattern belonging to the first group (the group with high dot arrangement density) corresponding to at least one of embodiments of the present invention. Fig. 5 illustrates an example of an arrangement pattern selected as a candidate in the dot pattern generating step by the dot pattern generating unit 11. In the example illustrated in Fig. 5, 14 types of arrangement patterns belong to the first group in total, and each arrangement pattern is a grid-shaped pattern where five dots are arranged in a dot arrangement region that allows arrangement of nine dots (three vertical dots by three horizontal dots) at maximum. In the present example, the 15 types of arrangement patterns are a combination of patterns that are different in dot arrangement from each other and do not overlap each other when being subjected to translation in the dot arrangement region. Also in the present example, unique numbers from 0 to 14 are respectively allocated to the arrangement patterns. The selection processing by the dot pattern generating unit 11 involves randomly generating any one of 0 to 14 and selecting one of the arrangement patterns corresponding to the generated numeric value. In a case where adjacent two dots are arranged in accordance with an arrangement pattern, the two dots in projection light projected by the dot pattern projection control unit 12 may be contiguous with each other or may be separated from each other by a predetermined distance.

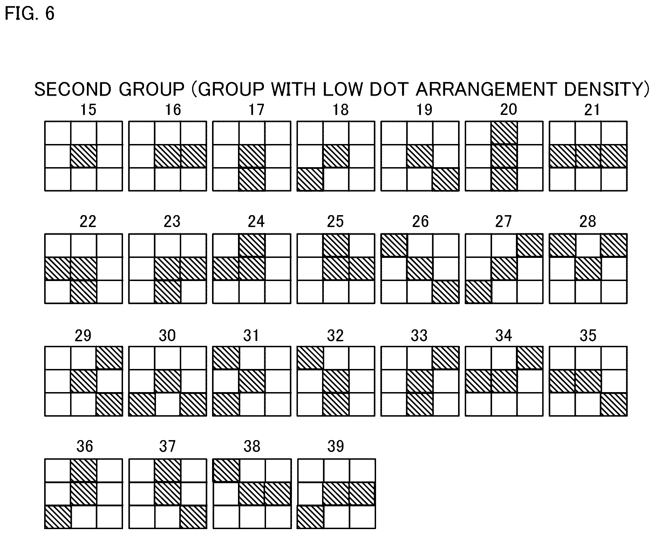

Fig. 6 is an explanatory diagram explaining an example of an arrangement pattern belonging to the second group (the group with low dot arrangement density) corresponding to at least one of embodiments of the present invention. Fig. 6 illustrates an example of an arrangement pattern selected as a candidate in the dot pattern generating step by the dot pattern generating unit 11. In the example illustrated in Fig. 6, 25 types of arrangement patterns belong to the second group in total, and each arrangement pattern is a grid-shaped pattern where one to three dots are arranged in a dot arrangement region that allows arrangement of nine dots (three vertical dots by three horizontal dots) at maximum. In the present example, the 25 types of arrangement patterns are a combination of patterns that are different in dot arrangement from each other and do not overlap each other when being subjected to translation in the dot arrangement region. Also in the present example, unique numbers from 15 to 39 are respectively allocated to the arrangement patterns. The selection processing by the dot pattern generating unit 11 involves randomly generating any one of 15 to 39 and selecting one of the arrangement patterns corresponding to the generated numeric value.

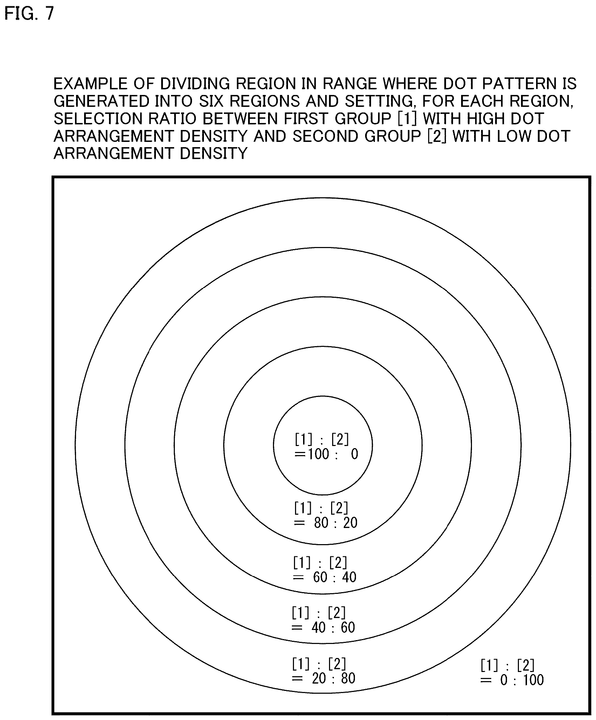

Fig. 7 is an explanatory diagram explaining an example of a way to set density information and arrange dots for each region corresponding to at least one of embodiments of the present invention. Fig. 7 illustrates an example of dividing a region in a range where a dot pattern is generated into six regions with concentric circles and setting, for each region, a selection ratio between the first group with high dot arrangement density (represented by [1] in Fig. 7) and the second group with low dot arrangement density (represented by [2] in Fig. 7). In the example illustrated in Fig. 7, density information is set by setting a selection ratio such that arrangement patterns are selected from the first group at a ratio of 100% (i.e., [1] : [2] = 100:0) at the center of the range where the dot pattern is generated. Likewise, density information is set for each region by setting a selection ratio such that a ratio of the second group gradually increases (i.e., [1] : [2] = 80:20, [1] : [2] = 60:40, [1] : [2] = 40:60, [1]:[2] = 20:80), [1]:[2] = 0:100) in the direction away from the center.

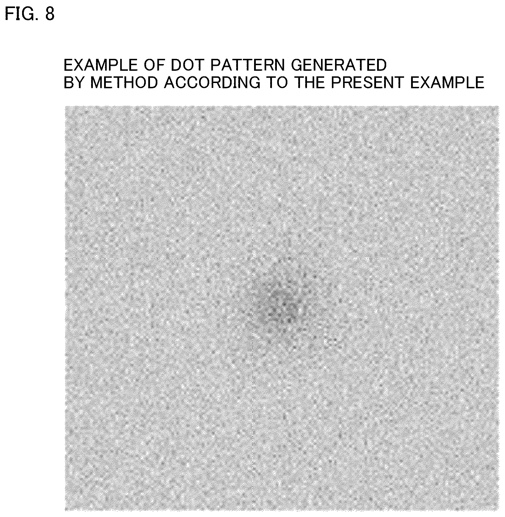

Fig. 8 is an image diagram illustrating an example of a dot pattern generated based on the way to set the density information and arrange the dots for each region corresponding to at least one of embodiments of the present invention. Fig. 8 illustrates an example of generating a dot pattern by selecting the arrangement patterns from the two groups, based on the setting of the density information for each region illustrated in Fig. 7. As can been seen from Fig. 8, it is possible to generate a dot pattern where the dot arrangement density is high at the center portion and gradually decreases in the direction away from the center. An image for three-dimensional measurement is captured by projection of projection light using the dot pattern thus generated, so that the amount of light in the captured image data becomes relatively uniform. It is therefore possible to acquire captured image data that causes no saturation of a dynamic range of a camera.

As described above, a dot pattern generating method according to the present invention is a dot pattern generating method for generating a dot pattern to be projected onto a target object with projection light in order to calculate parallax information and perform three-dimensional measurement by stereo matching, the dot pattern generating method including: a region dividing step of dividing a region in a range where the dot pattern is generated into at least two or more regions in accordance with a distance from an irradiation center of the projection light; a density determining step of determining density information on dots to be set for each of the plurality of regions, such that a density of the dots arranged in one of the plurality of regions farther from the irradiation center of the projection light is lower than a density of the dots arranged in another one of the plurality of regions closer to the irradiation center of the projection light; and a dot pattern generating step of generating the dot pattern by arranging the dots in each of the plurality of regions, based on a rule defined by an algorithm of poisson disk sampling and the determined density information. It is therefore possible to generate a dot pattern where the dot arrangement density in a region closer to an irradiation center of projection light is higher and gradually decreases in the direction away from the irradiation center of the projection light. An image for three-dimensional measurement is captured by projection of projection light using the dot pattern thus generated, so that the amount of light in the captured image data becomes relatively uniform. It is therefore possible to acquire captured image data that causes no saturation of a dynamic range of a camera.

Also in the dot pattern generating method according to the present invention, in the dot pattern generating step, the dot pattern is generated by: determination processing of determining a plurality of reference positions in accordance with the rule defined by the algorithm of poisson disk sampling; selection processing of selecting one of a plurality of arrangement patterns each indicating an arrangement of at least one or more dots, in order to arrange the dots at the respective reference positions; and arrangement processing of arranging the dots at the respective reference positions, based on the selected arrangement pattern, in the dot pattern generating step, at least two or more groups are previously set, in which the arrangement patterns are classified in accordance with an arrangement density of the dots, and in the selection processing, the arrangement patterns for arranging the dots at the respective reference positions are selected based on a predetermined selection rule that determines, for each region, from which group to select the arrangement patterns to be arranged in the region. Therefore, a group from which an arrangement pattern is selected is adjusted as appropriate for each region, such as a region for which an arrangement pattern is selected from a group with high dot arrangement density or a region for which an arrangement pattern is selected from a group with low dot arrangement density. As a result, it is possible to generate a dot pattern where the dot arrangement density in a region closer to an irradiation center of projection light is higher and gradually decreases in the direction away from the irradiation center of the projection light.

Also in the dot pattern generating method according to the present invention, the selection rule determines a ratio of selecting the arrangement patterns to be arranged in each region, from the plurality of groups, to reflect the density information set for the region. Therefore, a ratio of selecting an arrangement pattern from the group with high dot arrangement density and a ratio of selecting an arrangement pattern from the group with low dot arrangement density are set for each region. As a result, it is possible to generate a dot pattern where the dot arrangement density in a region closer to an irradiation center of projection light is higher and gradually decreases in the direction away from the irradiation center of the projection light.

Also in the dot pattern generating method according to the present invention, the plurality of arrangement patterns are a combination of patterns that, with regard to which locations in a preset dot arrangement region to arrange the dots, do not overlap each other when being subjected to translation in the dot arrangement region. It is therefore possible to reduce a possibility that corresponding locations in stereo matching are erroneously identified.

In addition, a three-dimensional measuring apparatus according to the present invention is a three-dimensional measuring apparatus for performing three-dimensional measurement on a target object, the three-dimensional measuring apparatus including: a dot pattern generating unit that generates a dot pattern, based on the dot pattern generating method having any one of the foregoing features; a dot pattern projection control unit that controls a projecting device such that the projecting device projects projection light having the dot pattern onto the target object; a captured image acquiring unit that acquires two captured images by controlling an image capturing device such that the image capturing device captures images of the target object, to which the projection light has been projected, from two directions; a parallax information calculating unit that calculates parallax information on the acquired two captured images; and a three-dimensional shape identifying unit that identifies a three-dimensional shape of the target object, based on the calculated parallax information. It is therefore possible to acquire captured image data undergoing no blooming or black crushing, without saturation of a dynamic range of a camera. As a result, it is possible to improve accuracy of identifying corresponding locations in stereo matching.

It should be noted that the three-dimensional measuring apparatus 10 may include, instead of the dot pattern generating unit 11 that generates the present example dot pattern in real time, a dot pattern generation processing unit that previously generates the present example dot pattern and stores the present example dot pattern in a predetermined storage unit. In this case, the dot pattern projection control unit 12 reads the present example dot pattern from the storage unit and controls the projecting device 20 such that the projecting device 20 projects projection light having the present example dot pattern onto the target object. Examples of the method of storing the dot pattern may include a method of retaining the dot pattern printed on a photomask in the apparatus, in addition to a method of saving the dot pattern as an image file.

### Second Embodiment

In a dot pattern generating step, a dot pattern generating unit 11 according to a second embodiment may generate a dot pattern by: determination processing of determining a plurality of reference positions in accordance with a rule defined by an algorithm of poisson disk sampling; selection processing of selecting one of a plurality of arrangement patterns each indicating an arrangement of at least one or more dots, in order to arrange dots at the respective reference positions; and arrangement processing of arranging the dots at the respective reference positions, based on the selected arrangement pattern, and in the determination processing, an arrangement density of the dots arranged at the reference positions in each region may be determined based on density information set for the region.

That is, it is possible to divide a region in a range where a dot pattern is generated into a plurality of regions and to adjust arrangement of reference positions such that a density of dots arranged at reference positions in one of the regions closer to a center is higher than a density of dots arranged at reference positions in another one of the regions farther from the center, thereby generating a dot pattern where the dot arrangement density in one of the regions closer to an irradiation center of projection light is higher and gradually decreases in the direction away from the irradiation center of the projection light.

In the first and second embodiments described above, a dot pattern is generated through a procedure of determining a reference position first, and arranging a dot at the determined reference position, based on an arrangement pattern; however, the present invention is not limited thereto. That is, the present invention is not limited to a method of generating a dot pattern using an arrangement pattern as long as a dot pattern can be generated so that the dot density closer to a center in a range where the dot pattern is generated is higher and gradually decreases in the direction away from the center. For example, a way to directly arrange dots by an algorithm of poisson disk sampling is employed, and a density of the arranged dots is adjusted based on density information set for each region. As a result, a dot pattern may be generated so that the dot density closer to a center in a range where the dot pattern is generated is higher and gradually decreases in the direction away from the center.

### Reference Signs List

10: Three-dimensional measuring apparatus
11: Dot pattern generating unit
12: Dot pattern projection control unit
13: Captured image acquiring unit
14: Parallax information calculating unit
15: Three-dimensional shape identifying unit
16: Storage unit
20: Projecting device
30: Image capturing device

## Claims

1. A dot pattern generating method for generating a dot pattern to be projected onto the target object with projection light in order to calculate parallax information and perform three-dimensional measurement by stereo matching,
the dot pattern generating method comprising:
a region dividing step of dividing a region in a range where the dot pattern is generated into at least two or more regions in accordance with a distance from an irradiation center of the projection light;
a density determining step of determining density information on dots to be set for each of the plurality of regions, such that a density of the dots arranged in one of the plurality of regions farther from the irradiation center of the projection light is lower than a density of the dots arranged in another one of the plurality of regions closer to the irradiation center of the projection light; and
a dot pattern generating step of generating the dot pattern by arranging the dots in each of the plurality of regions, based on a rule defined by an algorithm of poisson disk sampling and the determined density information.

2. The dot pattern generating method according to claim 1, wherein
in the dot pattern generating step, the dot pattern is generated by:
determination processing of determining a plurality of reference positions in accordance with the rule defined by the algorithm of poisson disk sampling;
selection processing of selecting one of a plurality of arrangement patterns each indicating an arrangement of at least one or more dots, in order to arrange the dots at the respective reference positions; and
arrangement processing of arranging the dots at the respective reference positions, based on the selected arrangement pattern,
in the dot pattern generating step, at least two or more groups are previously set, in which the arrangement patterns are classified in accordance with an arrangement density of the dots, and
in the selection processing, the arrangement patterns for arranging the dots at the respective reference positions are selected based on a predetermined selection rule that determines, for each region, from which group to select the arrangement patterns to be arranged in the region.

3. The dot pattern generating method according to claim 2, wherein
the selection rule determines a ratio of selecting the arrangement patterns to be arranged in each region, from the plurality of groups, to reflect the density information set for the region.

4. The dot pattern generating method according to claim 1, wherein
in the dot pattern generating step, the dot pattern is generated by:
determination processing of determining a plurality of reference positions in accordance with the rule defined by the algorithm of poisson disk sampling;
selection processing of selecting one of a plurality of arrangement patterns each indicating an arrangement of at least one or more dots, in order to arrange the dots at the respective reference positions; and
arrangement processing of arranging the dots at the respective reference positions, based on the selected arrangement pattern, and
in the determination processing, an arrangement density of the dots arranged at the reference positions in each region is determined based on the density information set for the region.

5. The dot pattern generating method according to any one of claims 2 to 4, wherein
the plurality of arrangement patterns are a combination of patterns that, with regard to which locations in a preset dot arrangement region to arrange the dots, do not overlap each other when being subjected to translation in the dot arrangement region.

6. A three-dimensional measuring apparatus for performing three-dimensional measurement on a target object,
the three-dimensional measuring apparatus comprising:
a dot pattern generating unit that generates a dot pattern, based on the dot pattern generating method according to any one of claims 1 to 5;
a dot pattern projection control unit that controls a projecting device such that the projecting device projects projection light having the dot pattern onto the target object;
a captured image acquiring unit that acquires two captured images by controlling an image capturing device such that the image capturing device captures images of the target object, to which the projection light has been projected, from two directions;
a parallax information calculating unit that calculates parallax information on the acquired two captured images; and
a three-dimensional shape identifying unit that identifies a three-dimensional shape of the target object, based on the calculated parallax information.

7. A three-dimensional measuring apparatus for performing three-dimensional measurement on a target object,
the three-dimensional measuring apparatus comprising:
a dot pattern generation processing unit that previously generates a dot pattern, based on the dot pattern generating method according to any one of claims 1 to 5, and stores the dot pattern in a predetermined storage unit;
a dot pattern projection control unit that reads the dot pattern from the storage unit and controls a projecting device such that the projecting device projects projection light having the dot pattern onto the target object;
a captured image acquiring unit that acquires two captured images by controlling an image capturing device such that the image capturing device captures images of the target object, to which the projection light has been projected, from two directions;
a parallax information calculating unit that calculates parallax information on the acquired two captured images; and
a three-dimensional shape identifying unit that identifies a three-dimensional shape of the target object, based on the calculated parallax information.
